(19) Europäisches Patentamt
European Patent Office
Office européen des brevets

(11) **EP 3 210 226 B1**

(12) **EUROPÄISCHE PATENTSCHRIFT**

(45) Veröffentlichungstag und Bekanntmachung des Hinweises auf die Patenterteilung:
**01.05.2019  Patentblatt 2019/18**

(21) Anmeldenummer: **15756858.5**

(22) Anmeldetag: **12.08.2015**

(51) Int Cl.:
*H01H 9/54* *(2006.01)*    *H01H 33/59* *(2006.01)*

(86) Internationale Anmeldenummer:
**PCT/EP2015/068590**

(87) Internationale Veröffentlichungsnummer:
**WO 2016/062427 (28.04.2016 Gazette 2016/17)**

(54) **TRENNSCHALTER ZUR GALVANISCHEN GLEICHSTROMUNTERBRECHUNG**

DISCONNECTOR FOR GALVANIC DIRECT CURRENT INTERRUPTION

DISJONCTEUR POUR L'INTERRUPTION GALVANIQUE DE COURANTS CONTINUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2014  DE 102014015643**

(43) Veröffentlichungstag der Anmeldung:
**30.08.2017  Patentblatt 2017/35**

(73) Patentinhaber: **Ellenberger & Poensgen GmbH**
**90518 Altdorf (DE)**

(72) Erfinder:
• **WILKENING, Ernst-Dieter**
**38108 Braunschweig (DE)**
• **KÖPF, Hendrik-Christian**
**38106 Braunschweig (DE)**
• **BÖSCHE, Dirk**
**38536 Seershausen (DE)**

(74) Vertreter: **FDST Patentanwälte**
**Nordostpark 16**
**90411 Nürnberg (DE)**

(56) Entgegenhaltungen:
**WO-A1-02/071429     FR-A1- 2 738 664**
**US-A1- 2010 254 046**

**Beschreibung**

Die Erfindung betrifft eine Trennvorrichtung zur Gleichstromunterbrechung zwischen einer Gleichstromquelle und einer elektrischen Einrichtung, mit einem stromführenden mechanischen Schalter und mit einer mit diesem verschalteten Leistungselektronik sowie mit einem Energiespeicher, dessen Aufladung mittels einer bei öffnendem Schalter an diesem infolge eines Lichtbogens erzeugten Lichtbogenspannung erfolgt Es werden hierbei unter einer Gleichstromquelle insbesondere ein Photovoltaikgenerator (PV-Generator, Solaranlage) und unter einer elektrischen Einrichtung insbesondere ein Wechselrichter verstanden.

Aus der DE 20 2008 010 312 U1 ist eine photovoltaische Anlage (PV-Anlage) oder Solaranlage mit einem sogenannten Photovoltaikgenerator bekannt, der seinerseits aus gruppenweise zu Teilgeneratoren zusammengefassten Solarmodulen besteht, die ihrerseits in Reihe geschaltet sind oder in parallelen Strängen vorliegen, wobei die Gleichstromleistung des Photovoltaikgenerators über einen Wechselrichter in ein Wechselspannungsnetz eingespeist wird. Da eine PV-Anlage systembedingt einerseits dauerhaft einen Betriebsstrom und eine Betriebsspannung im Bereich zwischen 180V (DC) und 1500V (DC) liefert und andererseits - beispielsweise zu Installations-, Montage- oder Servicezwecken sowie insbesondere auch zum allgemeinen Personenschutz - eine zuverlässige Trennung der elektrischen Komponenten oder Einrichtungen von der als Gleichstromquelle wirksamen Photovoltaikanlage gewünscht ist, muss eine entsprechende Trennvorrichtung in der Lage sein, eine Unterbrechung unter Last, d.h. ohne vorheriges Abschalten der Gleichstromquelle vorzunehmen.

Zur Lasttrennung kann ein mechanischer Schalter (Schaltkontakt) mit dem Vorteil eingesetzt werden, dass bei erfolgter Kontaktöffnung eine galvanische Trennung der elektrischen Einrichtung (Wechselrichter) von der Gleichstromquelle (Photovoltaikanlage) hergestellt ist. Werden demgegenüber zur Lasttrennung leistungsfähige Halbleiterschalter eingesetzt, so treten auch im Normalbetrieb unvermeidbare Leistungsverluste an den Halbleitern auf. Zudem ist mit derartigen Leistungshalbleitern keine galvanische Trennung und damit kein zuverlässiger Personenschutz sichergestellt.

Aus der DE 102 25 259 B3 ist ein als Lasttrenner ausgebildeter elektrischer Steckverbinder bekannt, der nach Art eines Hybridschalters ein Halbleiterschaltelement in Form beispielsweise eines Thyristors im Gehäuse des Wechselrichters sowie Haupt- und Hilfskontakte aufweist, die mit Photovoltaikmodulen verbunden sind. Der bei einem Aussteckvorgang voreilende Hauptkontakt ist dem nacheilenden und mit dem Halbleiterschaltelement in Reihe geschalteten Hilfskontakt parallel geschaltet. Dabei wird das Halbleiterschaltelement zur Lichtbogenvermeidung bzw. Lichtbogenlöschung angesteuert, indem dieser periodisch ein- und ausgeschaltet wird.

Zur Gleichstromunterbrechung kann auch ein hybrider elektromagnetischer Gleichstromschalter mit einem elektromagnetisch betätigten Hauptkontakt und mit einem IGBT (insulated gate bipolar transistor) als Halbleiterschalter vorgesehen sein (DE 103 15 982 A2). Ein derartiger Hybridschalter weist jedoch eine externe Energiequelle zum Betreiben einer Leistungselektronik mit einem Halbleiterschalter auf.

Aus der WO 2010/108565 A1 ist ein hybrider Trennschalter mit einem mechanischen Schalter oder Trennelement und einer diesem parallel geschalten Halbleiterelektronik bekannt, die im Wesentlichen zumindest einen Halbleiterschalter, vorzugsweise einen IGBT, umfasst. Die Halbleiterelektronik weist keine zusätzliche Energiequelle auf und ist bei geschlossenem mechanischem Schalter stromsperrend, d. h. praktisch strom- und spannungslos. Die Halbleiterelektronik gewinnt die zu deren Betrieb erforderliche Energie aus der Trennvorrichtung, d. h. aus dem Trennschaltersystem selbst, wozu die Energie des beim Öffnen des mechanischen Schalters entstehenden Lichtbogens genutzt wird. Hierbei ist die Halbleiterelektronik ansteuerseitig derart mit dem mechanischen Schalter verschaltet, dass bei sich öffnendem Schalter die Lichtbogenspannung über dessen Schaltkontakten infolge des Lichtbogens die Halbleiterelektronik stromleitend schaltet.

Sobald die Halbleiterelektronik stromleitend geschaltet ist, beginnt der Lichtbogenstrom von dem mechanischen Schalter auf die Halbleiterelektronik zu kommutieren. Die entsprechende Lichtbogenspannung bzw. der Lichtbogenstrom lädt hierbei einen Energiespeicher in Form eines Kondensators auf, der sich unter Erzeugung einer Steuerspannung zum lichtbogenfreien Abschalten der Halbleiterelektronik gezielt entlädt. Die vorgegebene Zeitdauer oder Zeitkonstante und somit die Ladedauer des Energiespeichers bzw. Kondensators bestimmt die Lichtbogendauer. Im Anschluss an den Ladevorgang startet ein Zeitglied, während dessen die Halbleiterelektronik lichtbogenfrei stromsperrend gesteuert wird. Die Zeitdauer des Zeitglieds ist dabei auf ein sicheres Löschen eingestellt. Das Dokument FR 2 738 664 A1 offenbart eine Trennvorrichtung zur Gleichstromunterbrechung zwischen einer Gleichstromquelle und einer elektrischen Einrichtung, mit einem stromführenden mechanischen Schalter und mit einer mit diesem verschalteten Leistungselektronik sowie mit einem Energiespeicher, mit mindestens einem Halbleiterschalter der die Leistungselektronik derart ansteuert, dass diese den Schalter kurzschließt.

Der Erfindung liegt die Aufgabe zu Grunde, eine besonders geeignete Trennvorrichtung (Hybridschalter oder -elektronik) zur Gleichstromunterbrechung zwischen einer Gleichstromquelle, insbesondere einem Photovoltaikgenerator, und einer elektrischen Einrichtung, insbesondere einem Wechselrichter, mit möglichst hohem Schaltvermögen und insbesondere möglichst hoher Ansteuergeschwindigkeit, d.h. sehr schneller Ansteuerung der Leistungselektronik der Trennvorrichtung anzugeben.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu weist die nachfolgend auch als Hybridschalter bezeichnete Trennvorrichtung einen stromführenden mechanischen Schalter und eine mit diesem verschaltete Leistungselektronik sowie einen Energiespeicher auf, dessen Aufladung mittels einer bei öffnendem Schalter an diesem infolge eines Lichtbogens erzeugten Lichtbogenspannung erfolgt. Der Hybridschalter umfasst des Weiteren einen nachfolgend auch als Impulsgeberschaltung bezeichneten Impulsgeber, der mit dem vorzugsweise als Kondensator ausgeführten Energiespeicher verbunden ist. Der Impulsgeber steuert den mindestens einen Halbleiterschalter der Leistungselektronik derart an, dass diese den Schalter kurschließt, was zum Verlöschen des Lichtbogens führt.

In vorteilhafter Ausgestaltung umfasst der Impulsgeber (die Impulsgeberschaltung) einen mit dem Energiespeicher verbundenen Halbleiterschalter, der leitenden gesteuert ist, wenn die Ladespannung des Energiespeichers einen eingestellten oder einstellbaren Spannungswert erreicht, der nachfolgend auch als Betriebsspannung bezeichnet wird. Dieser Halbleiterschalter des Impulsgenerators ist geeigneterweise ein Thyristor. An einem diesem Halbleiterschalter des Impulsgebers nachgeordneten Spannungsabgriff greift die Leistungselektronik ansteuerseitig einen, vorzugsweise aus der Betriebsspannung generierten, Steuerimpuls ab. Mit anderen Worten ist der Impulsgeber über diesen Spannungsabgriff mit der Steuerseite der Leistungselektronik, d. h. mit dem mindestens einen Halbleiterschalter steuerseitig verbunden, so dass dieser bei Vorleigen des Steuerimpulses oder Steuersignals des Impulsgebers durchsteuert, also leitend geschaltet wird und das Kurschließen des mechanischen Schalters, insbesondere dessen Schalterkontakte oder entsprechender Kontaktanschlüsse bewirkt. Vorzugsweise erzeugt der Impulsgeber pro Schaltvorgang lediglich einen einzelnen Steuerimpuls, d. h. einen Einzelimpuls.

In zweckmäßiger Weiterbildung weist der Impulsgeber einen mit dem Energiespeicher verbundenen Kondensator auf. Dieser, beispielsweis mit einem Entladewiderstand beschaltete Kondensator dient vorzugsweise als oder bewirkt ein Zeitglied, nach dessen Zeitablauf eine Abschaltung, d. h. ein Ausschalten des Steuerimpulses und mithin der Leistungselektronik erfolgt.

Zusätzlich umfasst der Impulsgeber eine Halbleiterschaltung mit vorzugsweise mehreren, mit weiteren Bauelementen, beispielsweise Widerständen und mindestens einer Zehnerdiode, beschalteten Halbleiterschaltern. Geeigneterweise umfasst der Impulsgenerator mindestens einen Thyristor und mindestens einen Transistor (bipolarer Transistor, MOS-Transistor, PMOS-Transistor). Die Halbleiterschaltung bewirkt in Verbindung mit dem Kondensator des Impulsgebers ein Ausschalten des am Spannungsabgriff anstehenden Steuerimpulses, wenn infolge der Aufladung des Kondensators des Impulsgenerators die Schaltspannung eines mit dem Spannungsabgriff verbundenen Halbleiterschalters in Form vorzugsweise eines MOS-Transistors oder PMOS-Transistors erreicht ist.

In vorteilhafter Ausgestaltung der Leistungselektronik weist diese einen ersten und einen zweiten Halbleiterschalter in Form zweckmäßigerweise jeweils eines IGBT mit Freilaufdiode auf. Diese Halbleiterschalter sind in einen ersten bzw. in einen zweiten Strompfad geschaltet, an den ein erster bzw. zweiter Schalteranschluss des mechanischen Schalters geführt ist. In diese Strompfade sind geeigneterweise Dioden geschaltet, die zusammen mit den Freilaufdioden zur Gleichrichtung der Lichtbogenspannung dienen. Mittels der zwei Halbleiterschalter wird erreicht, dass die Leistungselektronik bidirektional einsetzbar ist, und unabhängig vom Potential (positiv oder negativ) am jeweiligen Schalteranschluss des mechanischen Schalters stets beide Halbleiterschalter angesteuert werden.

Der Leistungselektronik ist geeigneterweise eine Treiberstufe mit zu einer komplementären Endstufe verschalteten Transistoren zugeordnet, welche Kollektor-emitter-seitig mit dem Energiespeicher verbunden und basisseitig an den Spannungsabgriff des Impulsgebers geführt sind. Diese Endstufe wirkt als Stromverstärker, wenn der Impulsgeber den Steuerimpuls an die Steuereingänge (Basen) der Treibertransistoren abgibt. Hierdurch ist ein schnelles Umladen der IGBT's der Leistungselektronik erreicht, was wiederum einen besonders schnellen Schaltvorgang ermöglicht. Geeigneterweise stellt hierbei der Kondensator der Treiberschaltung den Umladestrom bereit.

Der oder jeder Halbleiterschalter der Leistungselektronik ist in zweckmäßiger Weiterbildung (kollektor-basisseitg) mit einer Reihenschaltung aus einem Widerstandes und einer Diode beschaltet. Das Potential zwischen der Diode und dem Widerstand entspricht der Durchlassspannung des Halbleiterschalters (IGBT), zuzüglich der Sättigungsspannung der Diode. Mit dieser somit als Messschaltung dienenden Reihenschalung kann in Kenntnis der Halbleiter- bzw. IGBT-Kennlinie eine Aussage über den Stromfluss durch den Halbleiterschalter, d. h. durch den entsprechenden Leistungshalbleiter getroffen werden. Hierdurch ist eine Überstromerkennung ohne zusätzliches Strom-Messelement in Form beispielsweise eines kostenintensiven Shunts bereitgestellt. Eine vorzugsweise diese Reihen- oder Messschaltung umfassende oder auch separate Schutzschaltung schaltet den Steuerimpuls des Impulsgebers ab, wenn die Kollektor-Emitter-Spannung des Halbleiterschalters (IGBT) der Leistungselektronik einen Schwellwert überschreitet.

Bei zwei Halbleiterschaltern (IGBT's) sind zwei derartige Schutzschaltungen, vorzugsweise inklusive Messschaltung (Reihenschaltung aus Diode und Widerstand), für den jeweiligen IGBT vorgesehen. Die jeweilige Schutzschaltung bewirkt ein kurzfristiges, d. h. ein ausreichend schnelles Ausschalten der Leistungselektronik, um die IGBT's zu deren Schutz im Fehlerfall innerhalb von vorzugsweise 10μs abzuschalten.

Die Trennvorrichtung weist geeigneterweise ein mit der Leistungselektronik verbundenes Netzteil mit mindestens einem mit dem Energiespeicher verschalteten Halbleiterschalter in Form vorzugsweise eines IGBT auf, der zweckmäßigerweise mit einem weiteren Halbleiterschalter (NPN-Transistor) sowie Widerständen und mindestens einer Zenerdiode beschaltet und zur Ladung des Energiespeichers mittels der Lichtbogenspannung und - bei Erreichen der Betriebsspannung - anschließenden Ladungsunterbrechung angesteuert ist.

Die Erfindung geht dabei von der Überlegung aus, dass mittels des Impulsgebers, der vorzugsweise pro Schaltvorgang nur einen Einzelimpuls erzeugt, eine sehr schnelle Ansteuerung der Leistungselektronik einer hybriden Trennvorrichtung erreicht und somit deren Schaltvermögen besonders hoch, d. h. gegenüber bekannten Trennvorrichtungen erhöht ist. Zudem ist mittels der Schutzschaltung eine sichere Überstromerkennung der Leistungselektronik bei gleichzeitig kostensparender Messeinrichtung in Form der Reihenschaltung aus Diode und Widerstand ermöglicht. Des Weiteren ist ein besonders kompakter Schaltungsaufbau der Leistungselektronik ermöglicht.

Die erfindungsgemäße Trennvorrichtung ist vorzugsweise zur Gleichstromunterbrechung im Gleichspannungsbereich geeigneterweise auch bis zu 1500V (DC) vorgesehen. Beim bevorzugten Einsatz des zusätzlichen mechanischen Trennschalters ist diese autarke, hybride Trennvorrichtung daher zur zuverlässigen und berührungssicheren galvanischen Gleichstromunterbrechung sowohl zwischen einer Photovoltaikanlage und einem dieser zugeordneten Wechselrichter als auch in Verbindung mit beispielsweise einer Brennstoffzellenanlage oder einem Akkumulator (Batterie) besonders geeignet.

Nachfolgend werden Ausführungsbeispiele der Erfindung anhand einer Zeichnung näher erläutert. Darin zeigen:

Fig. 1    in einem Blockschaltbild eine zwischen einem Photovoltaikgenerator und einem Wechselrichter angeordnete hybride Trennvorrichtung mit einem mechanischen Schalter und einer Leistungselektronik inklusive einer Schutzschaltung sowie mit einem Impulsgeber und einem Netzteil,

Fig. 2    in einem detaillierten Schaltbild die Trennvorrichtung mit zwei Halbleiterschaltern der Leistungselektronik und deren Treiber- und Schutzschaltungen sowie mit dem Impulsger und mit dem Netzteil mit einem Kondensatoren als Energiespeicher,

Fig. 3    den Impulsgeber als Teilschaltung der hybriden Trennvorrichtung,

Fig. 4    die Leistungselektronik mit Treiberendstufe eines der Halbeiterschalter sowie zwei Kontaktanschlüsse des mechanischen Schalters als Teilschaltung der hybriden Trennvorrichtung,

Fig. 5    die Schutzschaltung mit einer Messschaltung zur Überstromerkennung als Teilschaltung der hybriden Trennvorrichtung,

Fig. 6    das Netzteil mit einer Gleichrichterschaltung als Teilschaltung der hybriden Trennvorrichtung, und

Fig. 7    in einem Schaltbild gemäß Fig. 2 eine hybride Trennvorrichtung mit alternativer Gleichrichterschaltung.

Einander entsprechende Teile sind in beiden Figuren mit den gleichen Bezugszeichen versehen.

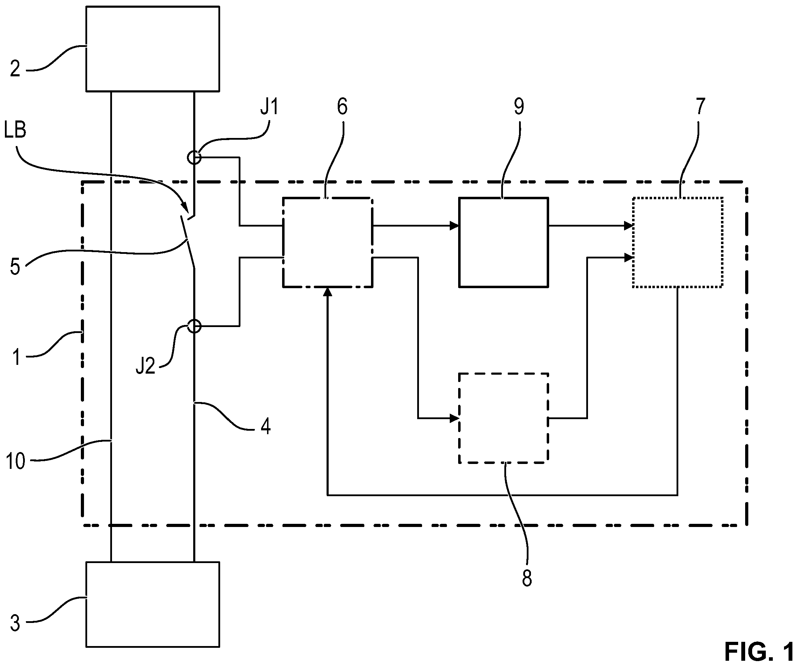

Fig. 1 zeigt schematisch eine Trennvorrichtung 1, die im Ausführungsbeispiel zwischen einen Photovoltaikgenerator 2 und einen Wechselrichter 3 geschaltet ist. Der Photovoltaikgenerator 2 kann in nicht näher dargestellter Art und Weise eine Anzahl von Solarmodulen 4 umfassen, die zueinander parallel liegend an einen gemeinsamen Generatoranschlusskasten geführt sind, der quasi als Energiesammelpunkt dient.

Die Trennvorrichtung 1 umfasst im den Pluspol repräsentierenden Hauptstrompfad 4 einen nachfolgend auch als mechanischen Schalter bezeichneten Schaltkontakt 5 und eine hierzu parallel geschaltete Leistungselektronik 6 sowie einen diese ansteuernden Impulsgeber 7. Die Trennvorrichtung 1 umfasst des Weiteren eine Schutzschaltung 8 und ein Netzteil 9. Der mechanische Schalter 5 und die Leistungselektronik 6 sowie der diese ansteuernde Impulsgeber 7 bilden einen autarken hybriden Trennschalter (Hybridschalter). In der den Minuspol repräsentierenden Rückführleitung 10 der Trennvorrichtung 1 - und damit der Gesamtanlage - kann in nicht näher dargestellter Art und Weise eine weiterer hybriden Trennschalter geschaltet sein. Sowohl in die den Pluspol repräsentierende Hinführungsleitung (Hauptpfad) 4 als auch in die Rückführungsleitung 10 können in nicht näher dargestellter Art und Weise miteinander mechanisch gekoppelte Schaltkontakte eines weiteren mechanischen Trennelementes für eine vollständige galvanische Trennung bzw. Gleichstromunterbrechung zwischen dem Photovoltaikgenerator 2 und dem Wechselrichter 3 angeordnet sein.

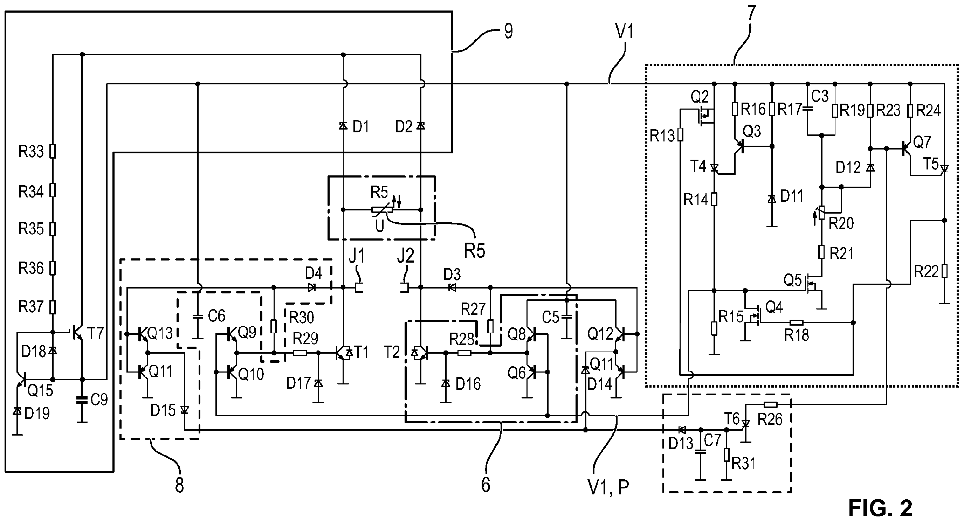

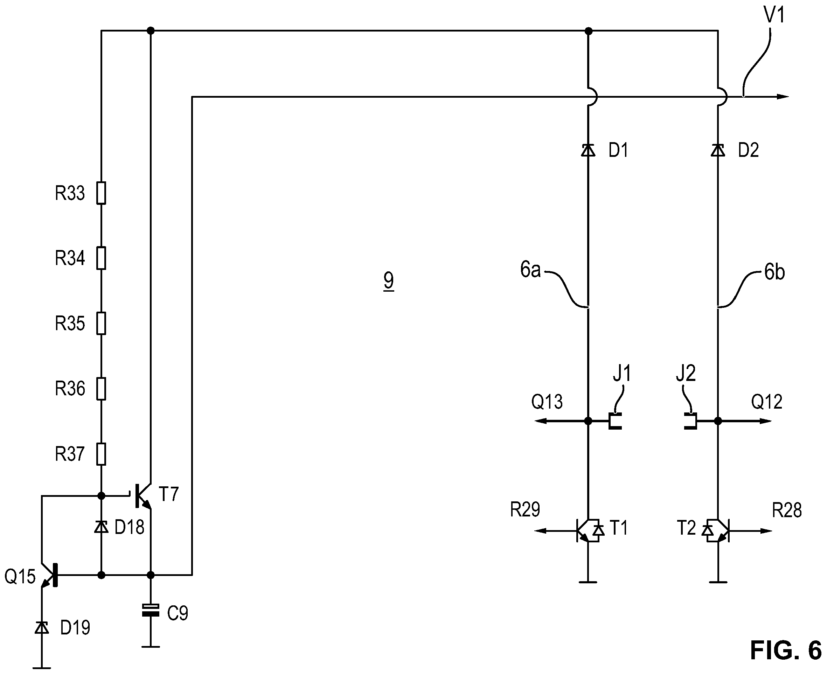

Wird während des Betriebs der dann stromdurchflossene mechanische Schalter 5 geöffnet, so bildet sich zwischen dessen Schaltkontakten ein Lichtbogen LB. Mittels der dadurch bedingten Lichtbogenspannung über den in Figur 1 gezeigten Schalteranschlüssen J1 und J2 wird ein Kondensator C9 (Figuren 2 und 6) als Energiespeicher geladen. Sobald dessen Ladespannung einen bestimmten Spannungswert erreicht, steuert der Impulsgeber 7 die Leistungselektronik 6 an, woraufhin diese den Schalter 5 kurzschließt und der Lichtbogen LB verlischt.

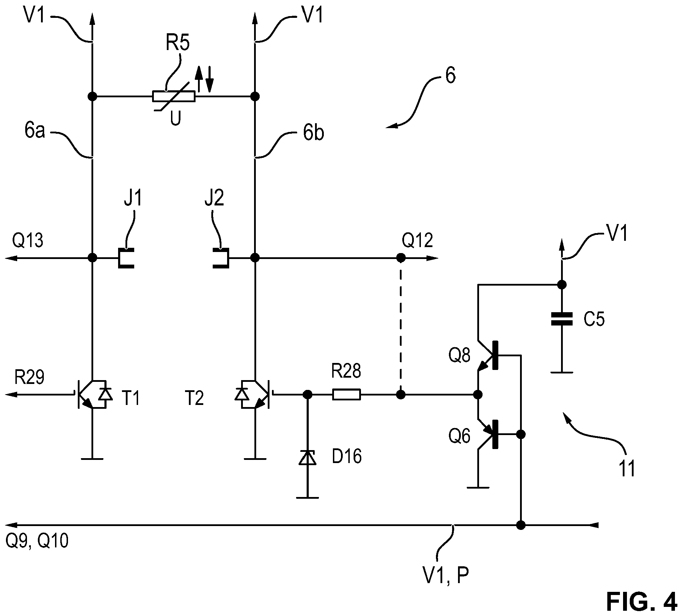

Hierbei bleibt die Leistungselektronik 6 geeigneterweise für eine gewisse Zeit, d.h. für ein eingestelltes oder einstellbares Zeitglied eingeschaltet, um ein Entionisieren der Schaltstrecke zu ermöglichen. Nach Ablauf der Zeitspanne bzw. des entsprechenden Zeitgliedes schaltet der Impulsgeber 7 die Leistungselektronik 6 aus. Eine beim Schaltvorgang entstehende Überspannung wird mit einem Varistor R5 (Figuren 2 und 4) begrenzt. Die Schutzschaltung 8 überwacht während des Schaltvorgangs den jeweiligen Leistungshalbleiter (IGBT) T1, T2 der Leistungselektronik 6, um dessen Zerstörung durch einen unzulässig hohen Strom zu vermeiden.

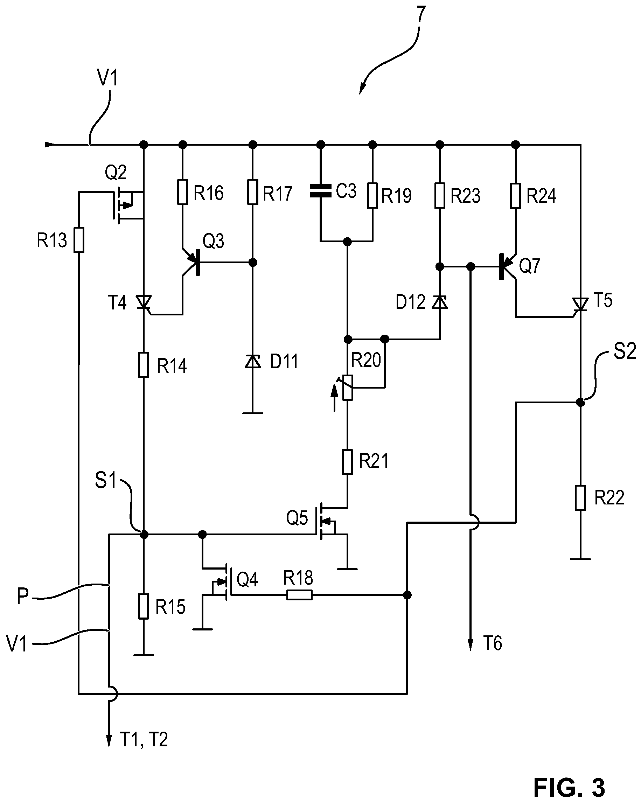

Figur 2 zeigt die Trennvorrichtung 1 im detaillierten Schaltbild, wobei dort die in Figur 1 verwendeten unterschiedlichen Linienarten die Bauteile der Leistungselektronik 6, des Impulsgebers, der Schutzschaltung 8 und des Netzteils 9 umrahmen. Da die Leistungselektronik 6 vorzugsweise zwei Halbleiterschalter in Form der gezeigten IGBT's T1 und T2 aufweist, sind auch jeweils zwei Schutzschaltungen 8 und zwei Treiberschaltungen für die IGBT's T1 und T2 vorgesehen. Dabei ist aus Gründen der besseren Übersichtlichkeit jeweils lediglich eine dieser Schaltungen mit deren Bauelementen mit der entsprechenden Linienart umrandet. Die einzelnen Teilschaltungen sind in den Figuren 3 bis 6 separat dargestellt.

Gemäß den Figuren 2 und 3 umfasst der Impulsgeber 7 einen über die Verbindung V1 an den Kondensator C9 geführten Halbleiterschalter in Form eines Thyristors T4, wobei dieser anodenseitig über einen PMOS-Transistor (P-Kanal-Metall-Oxyd-Halbleiter-Transistor) Q2, d. h. über dessen Kollektor-Emitter-Strecke an die zum Kondensator C9 führende V1 angeschlossen ist. Der Thyristor T4 ist ansteuerseitig über einen mit Widerständen R16 und R17 sowie mit einer Zenerdiode D11 beschalteten PMOS-Transistor Q3 verbunden. Kathodenseitig ist der Thyristor T4 über einen Widerstand R14 an einen Spannungsabgriff S1 geführt, welcher über einen Widerstand R15 mit Masse verbunden ist. Des Weiteren ist der Spannungsabgriff S1 über die Drain-Source-Strecke eines weiteren Transistors Q4, vorliegend eines NMOS- oder Bipolar-Transistors, gegen Masse geschaltet. Am Spannungsabgriff S1 liegt zudem die Basis oder das Gate eines weiteren Transistors (NMOS- oder Bipolar-Transistor) Q5, dessen Kollektor-Emitter-Strecke über Widerstände R19, R20 als Stellwiderstand und R21 sowie einen dem Widerstand R19 parallel geschalteten Kondensator C3 zwischen die zum Kondensator C9 führende Verbindung V1 und Masse geschaltet ist.

Parallel zum RC-Glied R19 und C3 liegt eine Reihenschaltung aus einem Widerstand R32 und einer Zenerdiode D12, an die kathodenseitig die Basis eines PNP-Transistors Q7 geführt ist. Die Steuerseite eines weiteren Thyristors T5 ist über den Transistor Q7 und einen Widerstand R24 an die zum Kondensator C9 führende Verbindung V1 geschaltet. Die Anoden-Kathoden-Strecke des Thyristors T5 ist zwischen die zum Kondensator C9 führende Verbindung V1 und - über einen Widerstand R22 - an Masse geführt. Ein kathodenseitiger Abgriff dieses Thyristors T5 ist über einen Widerstand R18 an das Gate (Basis) des Transistors Q4 sowie über einen Widerstand R13 an das Gate (Basis) des Transistors Q2 geführt. Die gezeigte und beschriebene Schaltung stellt zusätzlich zum Halbleiterschalter T4 eine entsprechend beschaltete Halbleiterschaltung des Impulsgenerators 7 dar. Der Impulsgeber 7 generiert den oder jeden Steuerimpuls P für die beiden IGBT's T1, T2 der Leistungselektronik 6, wie nachfolgend erläutert.

Die beiden Thyristoren T4 und T5 des Impulsgebers 7 befinden sich zu Beginn im sperrenden Zustand, so dass sich das Gate des Transistors Q2 auf Massepotential befindet. Steigt infolge eines beim Öffnen des mechanischen Schalters 5 entstehenden Lichtbogens LB die Ladespannung des Kondensators C5 und damit die Betriebsspannung an, so steigt auch die negative Gate-Source-Spannung des Transistors Q2, so dass dieser durchschaltet und die Anode des Thyristors T4 das Potential der Betriebsspannung hat. Steigt diese Spannung weiter an, so beginnt die Zenerdiode D11 in den leitenden Zustand überzugehen. Der dadurch bedingte Stromfluss verursacht einen Spannungsfall am Widerstand R17. Überschreitet dieser Spannungsfall den Schwellwert der Basis-Emitter-Spannung des Transistors Q3, so wird dieser leitfähig. Um den Transistor Q3 vor einer Zerstörung zu schützen, wird der Strom durch den Widerstand R16 begrenzt. Dieser Strom führt zu einer Zündung des Thyristors T4. Der Wert des Widerstands R14 ist wesentlich kleiner als derjenige des Widerstandes R15, so dass das Potential zwischen diesen beiden Widerständen R14, R15 am Spannungsabgriff S1, an welchem der Steuerimpuls P für die Leistungselektronik 6 abgegriffen wird, nur geringfügig unterhalb der Betriebsspannung.

Sobald der Thyristor T4 gezündet hat, schaltet der Transistor Q5 durch und der Kondensator C3 wird über die Widerstände R20 und R21 geladen. Da der Kondensator C3 zu Beginn ungeladen ist, befindet sich das Potential der Anode der Zenerdiode D12 auf Betriebsspannung. Durch das Aufladen des Kondensators C3 verschiebt sich das Potential nach Masse. Ist dieses Potential derart abgesunken, dass die Zenerdiode D12 leitend wird, so fließt ein Strom durch den Widerstand R23. Übersteigt der Spannungsfall über diesem Widerstand R23 den Schwellwert der Basis-Emitter-Spannung des PNP-Transistors Q7, so schaltet dieser durch. Der Widerstand R24 bewirkt eine Strombegrenzung und schützt den Transistor Q7.

Der über den Transistor Q7 fließende Strom führt zur Zündung des Thyristors T5, so dass das Potential an dessen Kathode auf die Betriebsspannung - abzüglich der Durchlassspannung - ansteigt. Somit schaltet auch der Transistor Q4 durch und zieht das Potential zwischen den Widerständen R14 und R15 am Spannungsabgriff S1 auf Masse. Zudem sperrt nun der Transistor Q2 und bewirkt ein Löschen des Thyristors T4. Somit sperrt auch der Transistor Q5 und der Kondensator C3 wird über den Widerstand R19 entladen. Der Thyristor T5 bleibt solange leitfähig, bis der Kondensator C9 entladen ist. Da der Kondensator während einer Lichtbodenphase und auch während der Schaltüberspannung nachgeladen wird, wird nur ein einziger Steuerimpuls ausgelöst.

Der in den Figuren 2 und 4 gezeigten Leistungselektronik 6 ist eine Treiberstufe 11 zugeordnet. Die IGBT's T1 und T2 der Leistungselektronik 6 bilden den unteren Teil einer B2-Gleichrichterbrücke. Durch Verwendung von zwei Leistungshalbleitern mit Freilaufdiode in Form der IGBT's T1 und T2 wird eine bidirektional einsetzbare Schaltung erreicht. Sollte der veranschaulichte Schalter- oder Kontaktanschluss J2 des mechanischen Schalters 5 positives und der andere Schalteranschluss J1 negatives Potential aufweisen, so kann der Strom durch den IGBT T2 und die Freilaufdiode des IGBT's T1 fließen. Bei umgekehrter Polarität ist ein Stromfluss durch den IGBT T1 und die Freilaufdiode des IGBT's T2 möglich. Da das Steuersignal eines IGBT's auf dessen Inversbetrieb keinen Einfluss hat, werden stets beide IGBT's T1 und T2 der Leistungselektronik 6 angesteuert.

Da die Treiberschaltungen 11 beider IGBT's T1 und T2 identisch aufgebaut sind, wird nachfolgend nur eine der beiden Treiberschaltungen 11 beschrieben. Die Treiberschaltung 11 umfasst einen NPN-Transistor Q8 und einen PNP-Transistor Q6, die zu einer komplementären Endstufe verschaltet sind. Gibt der Impulsgeber 7 den Steuerimpuls P an die Basen der beiden Transistoren Q6 und Q8 ab, so wirken diese als Stromverstärker und ermöglichen ein schnelles Umladen des Gates des jeweiligen IGBT's T2, T1. Hierdurch wird ein besonders schneller Schaltvorgang erzielt. Ein Kondensator T5 der Treiberschaltung 11 stellt den Umladestrom bereit. Der IGBT T2 ist durch einen Widerstand R28 bedämpft, da es aufgrund parasitärer Induktivitäten und Kapazitäten zu Schwingungsvorgängen während der Ansteuerung des jeweiligen IGBT's T2 kommen kann. Eine Zenerdiode D16 der Treiberschaltung 11 schützt das Gate des IGBT's T2 vor Überspannungen, sollten dennoch Schwingungen auftreten. Da es beim Schalten von induktiven Lasten aufgrund der steilen Schaltflanke des IGBT T2 zu Überspannungen kommen kann, begrenzt der Varistor R5 die Überspannung, um eine Zerstörung der Leistungshalbleiter T1, T2 zu verhindern.

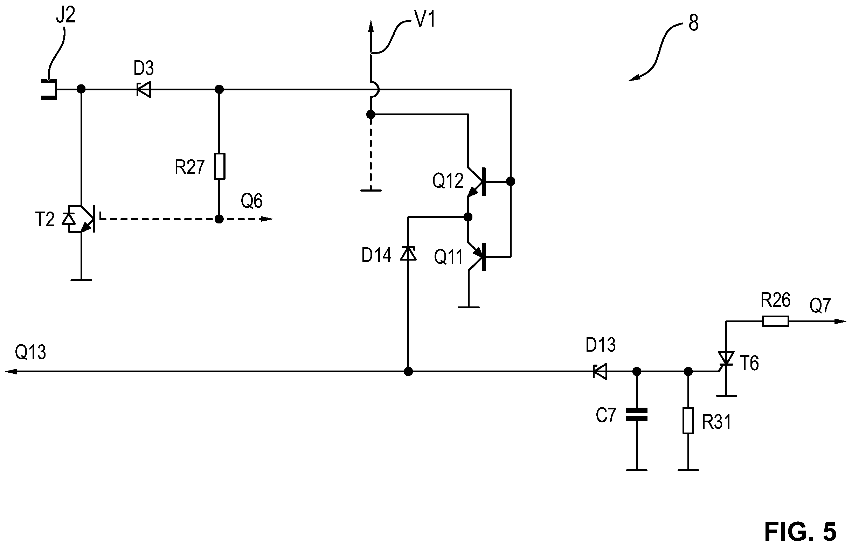

Die Figuren 2 und 5 zeigen die Mess- und Schutzschaltung 8 der Trennvorrichtung 1. Obwohl IGBT's als Halbleiterschalter der Leistungselektronik 6 prinzipiell kurzschlussfest sind, müssen diese dennoch im Fehlerfall innerhalb von 10 $\mu$s ausgeschaltet werden. Die Schaltungen 8 zur Überwachung bzw. Messung des Stroms der beiden IGBT's T1, T2 sind identisch aufgebaut, so dass Figur 5 wiederum lediglich eine solche Schaltung 8 zeigt. Die Messschaltung umfasst im Wesentlichen eine Reihenschaltung aus einem Widerstand R27 und einer Diode D3, die zwischen das Gate und den Kollektor des IGBT's T2 geschaltet ist/sind. Das Steuersignal des IGBT's T2 wird über den Widerstand R27 und die Diode D3 auf seine Kollektor-Emitter-Strecke gegeben.

Das Potential zwischen der Diode D3 und dem Widerstand R27 entspricht der Durchlassspannung des IGBT's T2, zuzüglich der Sättigungsspannung der Diode D3. Somit kann in Kenntnis der IGBT-Kennlinie eine Aussage über den Stromfluss durch diesen Leistungshalbleiter T2 getroffen werden. Um den Kondensator C9 als Energiespeicher während der Schaltphase nicht unnötig stark zu entladen, ist der Widerstand R27 relativ hochohmig. Um dennoch ein schnelles Ausschalten im Fehlerfall zu ermöglichen, wird eine komplementäre Endstufe mit entsprechend verschalteten Transistoren Q11 und Q12 nachgeschaltet. Eine emitterseitig mit der Endstufe verbundene Diode D14 ermöglicht das Parallelschalten der beiden Messschaltungen D3, R27 und D4, R28 (Figur 2).

Überschreitet die Kollektor-Emitter-Spannung des IGBT's T2 ein bestimmtes Potential, so zündet ein Thyristor T6 der Schutzschaltung 8. Hierdurch wird der Transistor Q7 des Impulsgebers (Impulsgeberschaltung) 7 durchgesteuert, womit der Ausschaltvorgang eingeleitet wird. Ein steuerseitig des Thyristors T6 gegen Masse geschalteter Kondensator C7 und ein diesem parallel liegender Widerstand R31 bilden einen Filter, um unter anderem ein Auslösen der Schutzschaltung 8 während der Einschaltphase des IGBT's T2 zu verhindern. Die Auslösespannung lässt sich mit folgender Formel ermitteln.

$$U_{CE}(T2) \geq U_{BE}(Q12) + U_D(D14) + U_Z(D13) + U_{z\ddot{u}}(T6) - U_D(D3),$$

wobei $U_{CE}$ die Kollektor-Emitter-Spannung, $U_{BE}$ die Basis-Emitter-Spannung, $U_D$ die Durchlassspannung, $U_Z$ die Zenerspannung und $U_{z\ddot{u}}$ die Zündspannung ist.

Die Figuren 2 und 6 zeigen den Schaltungsaufbau des Netzteils 9 der Trennvorrichtung 1. Das Netzteil 9 dient zum Laden des Kondensators C9 als Energiespeicher und zum Schutz vor einer Schaltüberspannung. Zwischen den Schalter- oder Kontaktanschlüssen J1 und J2 befindet sich der mechanische Schalter 5 (Fig. 1). Sobald der Schalter 5 den Stromkreis öffnet, bildet sich der Lichtbogen LB. Die Lichtbogenspannung wird über in Strompfade 6a und 6b der Halbleiterschalter (Leistungsschalter) T1 und T2 der Leistungselektronik 6 geschaltete Dioden D1, D2 und die Freilaufdioden der IGBT's T1 bzw. T2 gleichgerichtet.

Das Netzteil 9 umfasst einen Halbleiterschalter in Form eines IGBT T7, dessen Gate über Widerstände R33 bis R37 geladen wird. Sobald das Gate-Emitter-Potential des Thyristors T7 oberhalb der Threshold-Spannung liegt, steuert der IGBT T7 durch und der Kondensator C9 wird geladen. Mit dem IGBT T7 ist ein NPN-Transistor Q15 in der in Figur 6 gezeigten Weise verschaltet. Emitterseitig ist der Transistor Q15 über eine Zenerdiode D19 gegen Masse geschaltet. Erreicht das Potential des Kondensators C9 den Wert der Zenerdiode D19 zuzüglich der Basis-Emitter-Schwellwert-Spannung des Transistors Q15, so wird dieser leitfähig und begrenzt die Gate-Emitter-Spannung des IGBT T7. Dieser beginnt sodann zu sperren und der Ladestrom des Kondensators C9 wird unterbrochen. Die Zenerdiode D19 schütz zudem das Gate des IGBT T7 und den Transistor Q15 vor Überspannung.

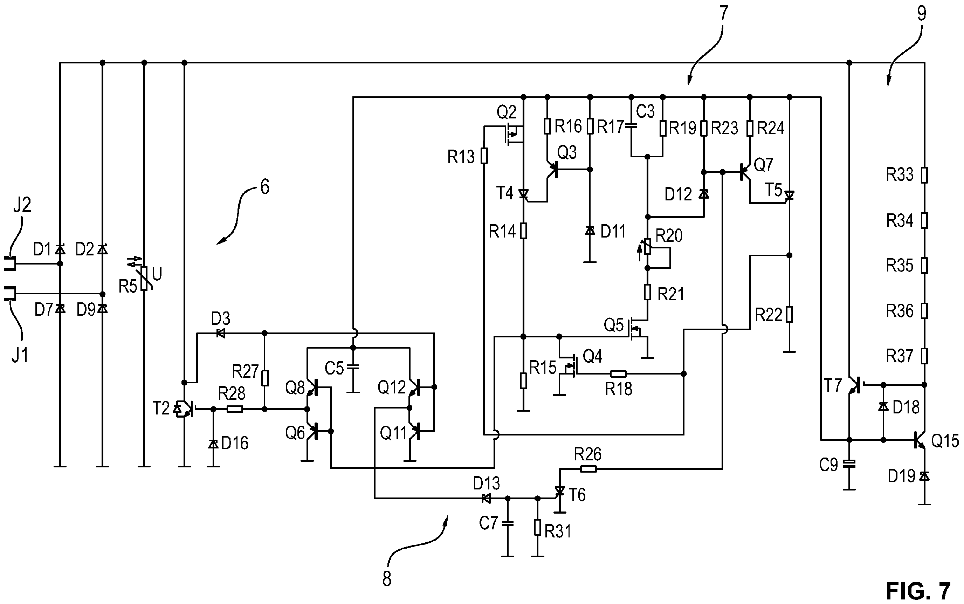

Die Trennvorrichtung 1 kann auch mit einem vorgeschalteten Gleichrichter betrieben werden. Eine entsprechende Schaltung ist in Figur 7 gezeigt. Erkennbar sind die einzelnen Teilschaltungen des Netzteils 9, des Impulsgebers 7 der Mess- und Schutzschaltung 8 sowie prinzipiell der Leistungselektronik 6 unverändert. Die in der in Figur 7 gezeigten Schaltung eingefügten Dioden D1 bis D4 müssen neben dem IGBT T2 als Halbleiterschalter der Leistungselektronik 6 den gesamten Strom tragen können. Zudem ist die Durchlassspannung im eingeschalteten Zustand durch die Reihenschaltung dreier Halbleiter vergleichsweise hoch.

Bezugszeichenliste

| | |
|---|---|
| 1 | Trennvorrichtung |
| 2 | PV-Generator |
| 3 | Wechselrichter |
| 4 | Hauptstrompfad |
| 5 | mechanischer Schalter |
| 6 | Leistungselektronik |
| 6a | Strompfad |
| 6b | Strompfad |
| 7 | Impulsgeber |
| 8 | Mess-/Schutzschaltung |
| 9 | Netzteil |
| 10 | Rückführleitung |
| 11 | Treiberstufe |
| | |
| C | Kondensator |
| D | Zener-/Diode |
| J1 | Schalteranschluss |
| J2 | Schalteranschluss |
| LB | Lichtbogen |
| P | Steuerimpuls |
| Q | Transistor |
| R | Widerstand |
| R5 | Varistor |
| S1 | Spannungsabgriff |
| S2 | Spannungsabgriff |
| T | IGBT |
| V1 | Verbindung |

**Patentansprüche**

1. Trennvorrichtung (1) zur Gleichstromunterbrechung zwischen einer Gleichstromquelle (2) und einer elektrischen Einrichtung (3), mit einem stromführenden mechanischen Schalter (5) und mit einer mit diesem verschalteten Leistungselektronik (6) sowie mit einem Energiespeicher (C9), dessen Aufladung mittels einer bei öffnendem Schalter (5) an diesem infolge eines Lichtbogens (LB) erzeugten Lichtbogenspannung erfolgt, und einen mit dem Energiespeicher (6) verbundenen Impulsgeber (7), der mindestens einen Halbleiterschalter (T1, T2) der Leistungselektronik (6) derart ansteuert, dass diese den Schalter (5) unter Verlöschen des Lichtbogens (LB) kurschließt.

2. Trennvorrichtung (1) nach Anspruch 1,
   **dadurch gekennzeichnet,**
   **dass** der Impulsgeber (7) einen mit dem Energiespeicher (C9) verbundenen und einem Spannungsabgriff (S1) vorgeschalteten Halbleiterschalter ($T_4$) umfasst, der leitenden gesteuert ist, wenn die Ladespannung des Energiespeichers (C9) eine eingestellte oder einstellbare Betriebsspannung erreicht.

3. Trennvorrichtung (1) nach Anspruch 1 oder 2,
   **dadurch gekennzeichnet,**
   **dass** die Leistungselektronik (6) ansteuerseitig einen aus der Ladespannung oder aus der Betriebsspannung generierten Steuerimpuls (P) am Spannungsabgriff (S1) des Impulsgebers (7) abgreift.

**4.** Trennvorrichtung (1) nach einem der Ansprüche 1 bis 3,
**dadurch gekennzeichnet,**
**dass** der Impulsgebers (7), insbesondere dessen Halbleiterschalter (T4), bei geschlossenem Schalter (5) die Ausgabe eines Steuerimpulses () für die Leistungselektronik (6) sperrt.

**5.** Trennvorrichtung (1) nach einem der Ansprüche 1 bis 4,
**dadurch gekennzeichnet,**

- **dass** die Leistungselektronik (6) einen ersten Halbleiterschalter (T1), insbesondere einen IGBT, vorzugsweise mit Freilaufdiode, aufweist, der in einen ersten Strompfad (6a) geschaltet ist, an den ein erster Schalteranschluss (J1) des mechanischen Schalters (5) geführt ist, und
- **dass** die Leistungselektronik (6) einen zweiten Halbleiterschalter (T2), insbesondere einen IGBT, vorzugsweise mit Freilaufdiode, aufweist, der in einen zweiten Strompfad (6b) geschaltet ist, an den ein zweiter Schalteranschluss (J2) des mechanischen Schalters (5) geführt ist.

**6.** Trennvorrichtung (1) nach einem der Ansprüche 1 bis 5,
**dadurch gekennzeichnet,**
**dass** die Leistungselektronik (6) eine Treiberstufe (11) mit zu einer komplementären Endstufe verschalteten Transistoren (Q6, Q8) aufweist, welche Kollektor-emitter-seitig mit dem Energiespeicher (C9) verbunden und basisseitig an den Spannungsabgriff (S1) des Impulsgebers (7) geführt sind.

**7.** Trennvorrichtung (1) nach einem der Ansprüche 1 bis 6,
**dadurch gekennzeichnet,**
**dass** der oder jeder Halbleiterschalter (T1, T2) der Leistungselektronik (6) kollektor-basis-seitig mit einer Reihenschalung aus einem Widerstand (R27) und einer Diode (D3) beschaltet ist, die mit einer Schutzschaltung (8) verbunden ist, welche den Steuerimpuls (S1) des Impulsgebers (7) abschaltet, wenn die Kollektor-Emitter-Spannung des Halbleiterschalters (T1, T2) der Leistungselektronik (6) einen Schwellwert überschreitet.

**8.** Trennvorrichtung (1) nach einem der Ansprüche 1 bis 7,
**dadurch gekennzeichnet,**
**dass** der Impulsgeber (7) einen mit dem Energiespeicher (C9) verbundenen Kondensator (C3) und zusätzlich zum dem Spannungsabgriff (S1) vorgeschalteten Halbleiterschalter ($T_4$) eine Halbleiterschaltung (Q2 bis Q5, Q7, T5) aufweist, die den Steuerimpuls (P) am Spannungsabgriff (S1) ausschaltet, wenn infolge der Aufladung des Kondensators (C3) die Schaltspannung eines mit dem Spannungsabgriff (S1) verbundenen Halbleiterschalters (Q4) der Halbleiterschaltung (Q2 bis Q5, Q7, T5) erreicht ist.

**9.** Trennvorrichtung (1) nach einem der Ansprüche 1 bis 8,
**gekennzeichnet durch**
ein mit der Leistungselektronik (6) verbundenes Netzteil (9) mit mindestens einem mit dem Energiespeicher (C9) verschalteten Halbleiterschalter (T7), der zur Ladung des Energiespeichers (C9) und - bei Erreichen der Betriebsspannung - anschließenden Ladungsunterbrechung angesteuert ist.

**10.** Trennvorrichtung (1) nach einem der Ansprüche 1 bis 9,
**gekennzeichnet durch**
eine Gleichrichterschaltung (D1, D2; D1 bis D4) zur Gleichrichtung der Lichtbogenspannung.

**Claims**

**1.** Isolating apparatus (1) for interrupting direct current between a direct current source (2) and an electrical device (3), having a current-carrying mechanical switch (5) and having a power electronics system (6) interconnected therewith and having an energy store (C9), which is charged by means of an arc voltage generated, when the switch (5) is open, at said switch as a result of an arc (LB), and a pulse generator (7) connected to the energy store (6), said pulse generator actuating at least one semiconductor switch (T1, T2) of the power electronics system (6) in such a way that said power electronics system short-circuits the switch (5) with the extinguishing of the arc (LB).

**2.** Isolating apparatus (1) according to Claim 1,
**characterized in that**

the pulse generator (7) comprises a semiconductor switch ($T_4$), which is connected to the energy store (C9), which is connected upstream of a voltage tap (S1) and which is turned on when the charging voltage of the energy store (C9) reaches a set or settable operating voltage.

3. Isolating apparatus (1) according to Claim 1 or 2,
   **characterized in that**
   the power electronics system (6) on the actuation side taps a control pulse (P) at the voltage tap (S1) of the pulse generator (7), said control pulse being generated from the charging voltage or from the operating voltage.

4. Isolating apparatus (1) according to one of Claims 1 to 3,
   **characterized in that**
   the pulse generator (7), in particular the semiconductor switch (T4) thereof, blocks the output of a control pulse () for the power electronics system (6) when the switch (5) is closed.

5. Isolating apparatus (1) according to one of Claims 1 to 4,
   **characterized in that**

   - the power electronics system (6) has a first semiconductor switch (T1), in particular an IGBT, preferably with freewheeling diode, said first semiconductor switch being switched into a first current path (6a) to which a first switch connection (J1) of the mechanical switch (5) is led, and
   - the power electronics system (6) has a second semiconductor switch (T2), in particular an IGBT, preferably with freewheeling diode, said second semiconductor switch being switched into a second current path (6b) to which a second switch connection (J2) of the mechanical switch (5) is led.

6. Isolating apparatus (1) according to one of Claims 1 to 5,
   **characterized in that**
   the power electronics system (6) has a driver stage (11) having transistors (Q6, Q8) interconnected to form a complementary end stage, said transistors being connected on the collector-emitter side to the energy store (C9) and being led on the base side to the voltage tap (S1) of the pulse generator (7).

7. Isolating apparatus (1) according to one of Claims 1 to 6,
   **characterized in that**
   the or each semiconductor switch (T1, T2) of the power electronics system (6) is wired on the collector-base side to a series circuit composed of a resistor (R27) and a diode (D3), said series circuit being connected to a protective circuit (8), which switches off the control pulse (S1) of the pulse generator (7) when the collector-emitter voltage of the semiconductor switch (T1, T2) of the power electronics system (6) exceeds a threshold value.

8. Isolating apparatus (1) according to one of Claims 1 to 7,
   **characterized in that**
   the pulse generator (7) has a capacitor (C3) connected to the energy store (C9) and, in addition to the semiconductor switch ($T_4$) connected upstream of the voltage tap (S1), a semiconductor circuit (Q2 to Q5, Q7, T5), which turns off the control pulse (P) at the voltage tap (S1) when the switching voltage of a semiconductor switch (Q4), connected to the voltage tap (S1), of the semiconductor circuit (Q2 to Q5, Q7, T5) is reached as a consequence of the charging of the capacitor (C3).

9. Isolating apparatus (1) according to one of Claims 1 to 8,
   **characterized by**
   a power supply unit (9) connected to the power electronics system (6) and having at least one semiconductor switch (T7) interconnected with the energy store (C9), said semiconductor switch being actuated to charge the energy store (C9) and - when the operating voltage is reached - to subsequently interrupt charging.

10. Isolating apparatus (1) according to one of Claims 1 to 9,
    **characterized by**
    a rectifier circuit (D1, D2; D1 to D4) for rectifying the arc voltage.

**Revendications**

1. Dispositif disjoncteur (1) pour l'interruption de courants continus entre une source de courant continu (2) et un dispositif électrique (3), comportant un commutateur mécanique (5) parcouru par un courant et une électronique de puissance (6) reliée à celui-ci, ainsi qu'un accumulateur d'énergie (C9) dont la charge est effectuée, lorsque le commutateur (5) est ouvert, au moyen d'une tension d'arc générée au niveau de celui-ci du fait d'un arc électrique (LB),
et comportant un générateur d'impulsions (7) qui est relié à l'accumulateur d'énergie (6) et qui commande au moins un commutateur à semi-conducteur (T1, T2) de l'électronique de puissance (6) de manière à ce que celle-ci court-circuite le commutateur (5) lors de l'extinction de l'arc électrique (LB).

2. Dispositif disjoncteur (1) selon la revendication 1,
**caractérisé en ce que** le générateur d'impulsions (7) comprend un commutateur à semi-conducteur ($T_4$) qui est relié au dispositif accumulateur d'énergie (C9) et est connecté en amont d'une dérivation de tension (S1) et qui est commandé de manière à être passant lorsque la tension de charge du dispositif accumulateur d'énergie (C9) atteint une tension de fonctionnement réglée ou réglable.

3. Dispositif disjoncteur (1) selon la revendication 1 ou 2,
**caractérisé en ce que** l'électronique de puissance (6) prélève, du côté de la commande, une impulsion de commande (P) générée à partir de la tension de charge ou de la tension de fonctionnement au niveau de la dérivation de tension (S1) du générateur d'impulsions (7).

4. Dispositif disjoncteur (1) selon l'une quelconque des revendications 1 à 3,
**caractérisé en ce que** le générateur d'impulsions (7), en particulier son commutateur à semi-conducteur (T4), bloque la sortie d'une impulsion de commande () destinée à l'électronique de puissance (6) lorsque le commutateur (5) est fermé.

5. Dispositif disjoncteur (1) selon l'une des revendications 1 à 4,
**caractérisé**

- **en ce que** l'électronique de puissance (6) comporte un premier commutateur à semi-conducteur (T1), en particulier un IGBT, de préférence muni d'une diode de roue libre, qui est connecté sur un premier trajet de courant (6a) auquel est raccordée une première borne de commutation (J1) du commutateur mécanique (5), et
- **en ce que** l'électronique de puissance (6) comporte un deuxième commutateur à semi-conducteur (T2), en particulier un IGBT, de préférence muni d'une diode de roue libre, qui est connecté sur un deuxième trajet de courant (6b) auquel est raccordée une deuxième connexion de commutateur (J2) du commutateur mécanique (5) .

6. Dispositif disjoncteur (1) selon l'une des revendications 1 à 5,
**caractérisé en ce que** l'électronique de puissance (6) comporte un étage de commande (11) muni de transistors (Q6, Q8) connectés à un étage de sortie complémentaire, qui sont raccordés, côté collecteur-émetteur, à l'accumulateur d'énergie (C9) et, côté base, à la dérivation de tension (S1) du générateur d'impulsions (7) .

7. Dispositif disjoncteur (1) selon l'une des revendications 1 à 6,
**caractérisé en ce que** le ou chaque commutateur à semi-conducteur (T1, T2) de l'électronique de puissance (6) est connecté, côté collecteur-base, à un circuit série constitué d'une résistance (R27) et d'une diode (D3) connectée à un circuit protecteur (8) qui coupe l'impulsion de commande (S1) du générateur d'impulsions (7) lorsque la tension collecteur-émetteur du commutateur à semi-conducteur (T1, T2) de l'électronique de puissance (6) dépasse un seuil.

8. Dispositif disjoncteur (1) selon l'une des revendications 1 à 7,
**caractérisé en ce que** le générateur d'impulsions (7) comporte un condensateur (C3) relié à l'accumulateur d'énergie (C9) et, en plus du commutateur à semi-conducteur ($T_4$) connecté en amont de la dérivation de tension (S1), un circuit à semi-conducteur (Q2 à Q5, Q7, T5) qui coupe l'impulsion de commande (P) au niveau de la dérivation de tension (S1) lorsque la tension de commutation d'un commutateur à semi-conducteur (Q4) du circuit à semi-conducteur (Q2 à Q5, Q7, T5), relié à la dérivation de tension (S1) est atteinte du fait de la charge du condensateur (C3).

9. Dispositif disjoncteur (1) selon l'une des revendications 1 à 8,
**caractérisé par** une unité d'alimentation (9) reliée à l'électronique de puissance (6) et comportant au moins un commutateur à semi-conducteur (T7) qui est relié au dispositif accumulateur d'énergie (C9) et qui est commandé pour charger le dispositif accumulateur d'énergie (C9) et - lorsque la tension de fonctionnement est atteinte - pour interrompre ensuite la charge.

10. Dispositif disjoncteur (1) selon l'une des revendications 1 à 9,
**caractérisé par** un circuit redresseur (D1, D2 ; D1 à D4) destiné redresser la tension d'arc électrique.

FIG. 1

FIG. 2

FIG. 3

FIG. 4

FIG. 5

FIG. 6

FIG. 7

EP 3 210 226 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008010312 U1
- DE 10225259 B3
- DE 10315982 A2
- WO 2010108565 A1
- FR 2738664 A1